# EUROPEAN PATENT APPLICATION

(11) **EP 2 113 863 A1**
(43) Date of publication of application: **04.11.2009**
(21) Application number: 08711539.0
(22) Date of filing: 19.02.2008
(51) Int. Cl.: G06F 21/24, G06F 17/30, G06F 21/20

(54) **INFORMATION ASSOCIATING SYSTEM, USER INFORMATION ASSOCIATING METHOD AND PROGRAM**

(30) Priority: 21.02.2007 JP 2007041398
(71) Applicant: NEC Corporation, Minato-ku Tokyo 108-8001 (JP)
(72) Inventor: WATANABE, Masafumi, Tokyo 108-8001 (JP)
(74) Representative: Vossius & Partner
(86) International application number: PCT/JP2008/052715
(87) International publication number: WO 2008/102754

(57) **Abstract**

When a collation result of user information is not matched, user information in one system need be prevented from being leaked to the other system. When hash values for an item serving as a key of correlation match with each other between a plurality of user information lists, it is determined that relevance is present, and then user information of the corresponding user is correlated.

## Description

### TECHNICAL FIELD

The present invention relates to a technique for correlating a plurality of user information pieces concerning the same person.

### BACKGROUND ART

User information is managed by various systems. Examples include a telephone directory in a portable telephone terminal 10; user information of an OS (operating system) of a personal computer; subscriber information in an IP telephone service or an instant messaging service; and employee information managed in a company.

In many cases, such user information is managed by a plurality of companies or individuals. However, when user information is utilized mutually between a plurality of companies or individuals, applications and services having high convenience can be realized.

For example, when telephone book data of a portable phone owned by a particular person is referred to, the portable phone may access an intra-company network 100 and the person may browse simultaneously the information that is concerning the person registered in the telephone directory and that is managed in an employee managing system.

In a personal computer, access to a file stored in an HDD device or the like is controlled on the basis of user information. When the user information managed by the OS is correlated with user position information in an entrance and exit managing system connected through a network or the like, access control to a file can be performed on the basis of the user's present position (for example, whether the user is located in the room where the personal computer is installed).

Here, the related arts for correlating a plurality of user information pieces concerning the same person include multi-entry identification by the same name and data cleansing.

The multi-entry identification by the same name is a technique of correlating one user information with the other user information among a plurality of user information on the basis of items such as the name and the address contained in the information. In particular, this technique is used for unified management of information such as customer data managed within a single company.

The data cleansing is used for finding out relevance of user information with other user information and then removing overlaps in the information stored in the database or the like.

Here, the following technique has been proposed. Purchase history is acquired by an anonymous ID, while the system is constructed such that the operation of correlating an anonymous ID with a personal ID requires a response from a membership card or a proxy server. The personal data itself is not encrypted and is stored in the form of a plaintext with adopting the personal ID and the anonymous ID as keys. The anonymous ID is updated at each time of being correlated with the personal ID on the server side. At that time, the anonymous ID that serves as an acquisition key for purchase history and that is accumulated together is also updated. By virtue of this, the personal data is managed anonymously. Further, the stored personal data is not encrypted, and yet the personal information is protected (see, for example, Patent Document 1).
Patent Document 1: Japanese Patent Laid-Open Application No. 2005-301978

### DISCLOSURE OF THE INVENTION

### PROBLEM TO BE SOLVED BY THE INVENTION

Nevertheless, such multi-entry identification by the same name and data cleansing are techniques adopted within a single company where the entire information can be accessed. Thus, when these techniques are adopted in a case that user information is disturbed and managed among a plurality of companies and individuals, there is a risk that information owned only by one side is leaked to the other side.

For example, a situation is considered that telephone directory information managed by a portable telephone terminal 10 and customer position information managed by a commercial facility are correlated with each other by collating the names, the telephone numbers, and the like registered therein, and that the screen of the portable telephone terminal 10 displays the position information of a friend located in the commercial facility together with a nickname.

In the example given above, the telephone directory information and the customer position information are managed independently by the individual and the company. In the related arts, the items themselves such as the name and the address in the plurality of information pieces serving as correlation targets are collated. Thus, when correlation is to be performed between information pieces where access permission for the user information is different from each other, like in the above-mentioned example, the related arts have a risk that the contents of information owned by one side but not owned by the other side are leaked to the other side.

Specifically, it is assumed that the portable telephone terminal 10 stores telephone directory information of a person 1, a person 2, and a person 3 and that customer position information of the person 1, a person 4, and a person 5 are registered in the customer data server.

As described above, when the names, the telephone numbers, and the like registered in the two parties are collated on the portable telephone terminal 10 side, the names, the telephone numbers, and the like of the person 4 and the person 5, registered in the customer position information server, are ratified to the owner of the portable telephone terminal 10. On the contrary, when the collation is performed on the commercial facility side, the names, the telephone numbers, and the like of the person 2 and the person 3 registered in the portable telephone terminal 10 are notified to the commercial facility.

Further, a risk of information leakage is present even when the user information of the same person is collated.

Specifically, it is assumed that the telephone number of the person 1 is registered as A in the telephone directory information in the portable telephone terminal 10 and as B in the customer position information in the customer data server. Then, even when collation is performed by either the portable telephone terminal 10 or the customer position information server, the telephone number registered on one side is leaked to the other side.

As such, when user information distributed and managed among a plurality of companies and individuals is to be correlated, prevention of the above-mentioned information leakage is an issue.

The present invention has been devised in order to resolve the problem described above. As for its object, an item of user information serving as a key of collation of user information is defined in a correlation rule. Then, a telephone directory information filtering section 12 generates a harsh value from the item of user information, while the comparison section 14 determines whether the generated hash value satisfies the condition, so that the user information is collated. By virtue of this, there are provided an information correlation system, a user information correlating method, and program in which the user information in one system is prevented from being leaked to the other system when a collation result of user information is not matched.

### MEANS FOR SOLVING THE PROBLEM

In order to achieve the object, the present invention has the following features.

The present invention provides an information correlation system for correlating a plurality of user information lists each containing a plurality of items, wherein
when hash values for an item serving as a key of correlation match with each other between the plurality of user information lists, it is determined that relevance is present, and
user information of a corresponding user is correlated.

Further, the present invention provides a user information correlating method for correlating a plurality of user information lists each containing a plurality of items, wherein
when hash values for an item serving as a key of correlation match with each other between the plurality of user information lists, it is determined that relevance is present, and
user information of a corresponding user is correlated.

Furthermore, the present invention provides a program for causing a computer system to execute processing of
determining that relevance is present when hash values for an item serving as a key of correlation match with each other between the plurality of user information lists, and
correlating user information of a corresponding user.

### EFFECT OF THE INVENTION

According to the present invention, an item of user information serving as a key of collation of user information is defined in a correlation rule. Then, a telephone directory information filtering section 12 generates a hash value from the item of user information, while the comparison section 14 determines whether the generated hash value satisfies the condition, so that the user information is collated. By virtue of this, when a collation result of user information is not matched, the user information in one system is prevented from being leaked to the other system. In other words, collation of user information can be performed without leakage of user information in one system to the other system.

### BEST MODE FOR CARRYING OUT THE INVENTION

Exemplary embodiments of the present invention are described below in detail with reference to the drawings. Here, the same parts in the figures are designated by the same numerals.

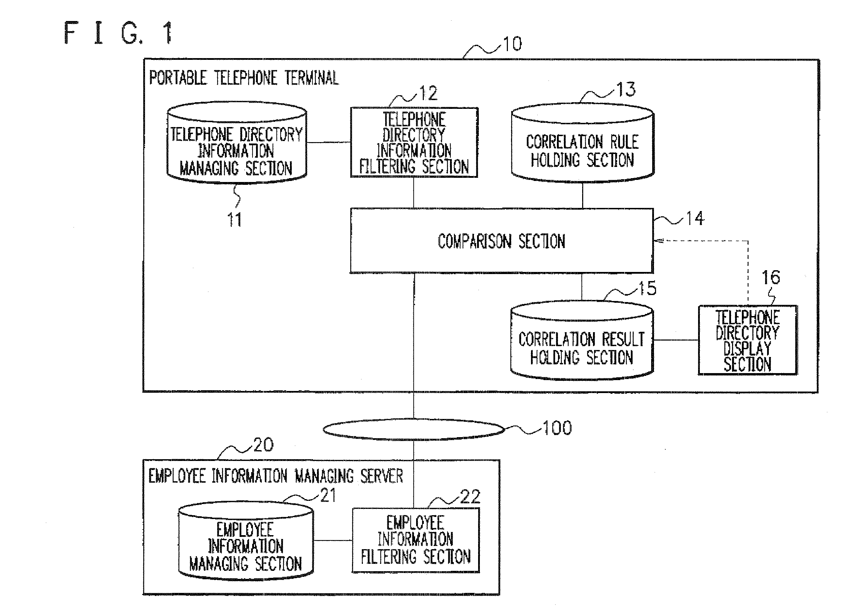

First, FIG. 1 shows a configuration of a first exemplary embodiment of the present invention. The configuration of an information correlation system in the present embodiment includes a portable telephone terminal 10, an intra-company network 100, and an employee information managing server 20.

The portable telephone terminal 10 includes a telephone directory information managing section 11, a telephone directory information filtering section 12, a correlation rule holding section 13, a comparison section 14, a correlation result holding section 15, and a telephone directory display section 16. In addition, the portable telephone terminal 10 includes also the function of connection to the intra-company network 100 through a wireless LAN or the like. Further, although not shown in the figure, the portable telephone terminal 10 includes also the function of a common portable telephone.

Although not shown in the figure, the telephone directory information managing section 11 can hold the name card information including the name, the portable telephone number, and the office E-mail (electronic mail address) of a call counterpart received from another portable telephone terminal through infrared ray communication or the like. The receiving of name card information is not limited to infrared ray communication from another portable telephone terminal 10. For example, a user may operate an input device such as buttons provided in the portable telephone terminal 10 so as to generate the name card information including the name, the portable telephone number, and the office E-mail of a call counterpart. Here, the telephone directory information managing section 11 can hold a plurality of name card information pieces.

As featuring parts of the present embodiment, a telephone directory information filtering section 12, a correlation rule holding section 13, and a comparison section 14 are included.

When a hash value of an item or a plurality of items contained in the name card information is requested from the comparison section 14, the telephone directory information filtering section 12 acquires the requested item from the telephone directory information managing section 11. Then, the hash value of the acquired item is calculated by using a one-way function. When the number of items is plural, one hash value is calculated by using all of the plurality of items in order sorted with respect to the item name. Then, the calculated hash value is transferred to the comparison section 14.

The correlation rule holding section 13 holds a plurality of correlation rules, and includes the function of transferring a requested correlation rule when the correlation rule is requested from the comparison section 14.

The correlation rule includes a condition for determining whether particular items contained in information are the same. A rule number that permits unique identification may be imparted to each correlation rule.

The comparison section 14 includes the function of acquiring a correlation rule from the correlation rule holding section 13, and the function of acquiring from the telephone directory information filtering section 12 and the employee information filtering section 22 a hash value of the item of the name card information and a hash value of the item of the employee information serving as targets of the condition of the correlation rule and of determining whether the condition of the correlation rule is satisfied. Further, when the number of name card information pieces, employee information pieces, or both of name card information pieces and employee information pieces are plural, whether the condition of the correlation rule is satisfied is determined for all combinations of the name card information pieces and the employee information pieces. When the condition of the correlation rule is satisfied, a set of the identifier of the name card information and the identifier of the employee information serving as targets of the determination is transferred to the correlation result holding section 15.

The correlation result holding section 15 includes the function of receiving and holding the set of the name card information identifier and the employee information identifier from the correlation comparison section 14, and includes the function of transferring the held set of the name card information identifier and the employee information identifier. The correlation result holding section 15 can hold a plurality of sets.

Although not shown in the figure, the telephone directory display section 16 acquires the name card information held by the telephone directory information managing section 11, and then displays the name card information onto an output device such as a liquid, crystal displays (similarly not shown). Further, the telephone directory display section 16 acquires a set of identifiers from the correlation result holding section 15. Then, when the identifier of the name card information to be displayed is contained in the above-mentioned set, the employee information identified by another identifier contained in the set is acquired from the employee information managing section 21 and then displayed onto the screen.

The employee information managing server 20 includes the employee information managing section 21 and the employee information filtering section 22, and is connected to the intra-company network 100 through a LAN or the like. The employee information managing server 20 may be implemented by a common server equipment or personal computer including a CPU, a memory, a hard disk drive, and the like.

The employee information managing section 21 holds information including the name, the division, the extension telephone number, and the E-mail of an employee working at the company. Here, the employee information managing section 21 can hold a plurality of employee information pieces.

When a hash value of an item or a plurality of items contained in the employee information is requested from the comparison section 14, the employee information filtering section 22 acquires the requested item from the employee information managing section 21. Then, the hash value of the acquired item is calculated by using a one-way function. When the number of items is plural, one hash value is calculated by using all of the plurality ef items in order sorted with respect to the item name. Then, the calculated hash value is transferred to the comparison section 14.

According to the present embodiment given above, information owned by one system but not owned by the other system can be prevented from being leaked. This is because the information exchanged between the systems is a hash value and hence calculation of the original information from the hash value is remarkably difficult.

Here, in the present embodiment given above, telephone directory information in the portable telephone terminal 10 is correlated with employee information in the employee information managing server 20. However, user information pieces to be correlated with each other in the present invention are not limited to these two. In the present embodiment given above, for convenience of description, the telephone directory information filtering section 12 and the employee information filtering section 22 have been shown. However, these two sections have the same function except for the point that user information to be treated is different from each other.

In the present embodiment given above, the telephone directory information filtering section 12 and the employee information filtering section 22 have performed comparison after acquiring the hash values of items of user information on the basis of a one-way function. Instead, a public key encryption algorithm such as RSA may be employed. An item of name card information and an item of employee information are encrypted by using a public key. Then, the encrypted texts obtained as a result of encryption are compared with each other. Here, a secret key corresponding to the public key is not used usually. However, the key need be owned by a manager or the like allowed to browse both the telephone directory information and the employee information.

The flow of operation of the present embodiment is described below with reference to the flow chart of FIG- 2. A variable i, a variable j, and a variable k have a value greater than or equal to zero, and can respectively indicate one name card information piece, one employee information piece, and one correlation rule selected from the plurality.

Step S1: Name card information i indicated by the variable i is selected by using an input device or the like of the portable telephone terminal 10.

Step S2: The telephone directory display section 16 transfers the variable i to the comparison section 14, and requests correlation with the employee information.

Step S3: The comparison section 14 sets the value of variable k to be 0.

Step S4: The comparison section 14 compares the variable k with the number of correlation, rules held by the correlation rule holding section 13. When the value of variable k is smaller than the number of correlation rules, the procedure goes to step S5. When the value of variable k is greater than or equal to the number of correlation rules, the procedure goes to step S8.

Step S5. The comparison section 14 acquires the correlation rule k indicated by the variable k from the correlation rule holding section 13.

Step S6: The comparison section 14 evaluates the correlation rule k. Details of step S6 are described later.

Step S7: The comparison section 14 increments by the value of variable k. Then, the procedure returns to step S4.

Step S8: The telephone directory display section 16 displays onto the screen the name and the portable telephone number contained in the name card information i selected at step S1. Further, with reference to the set held in the correlation result holding section 15, the division and the office E-mail contained in the employee information corresponding to the name card information are displayed onto the screen.

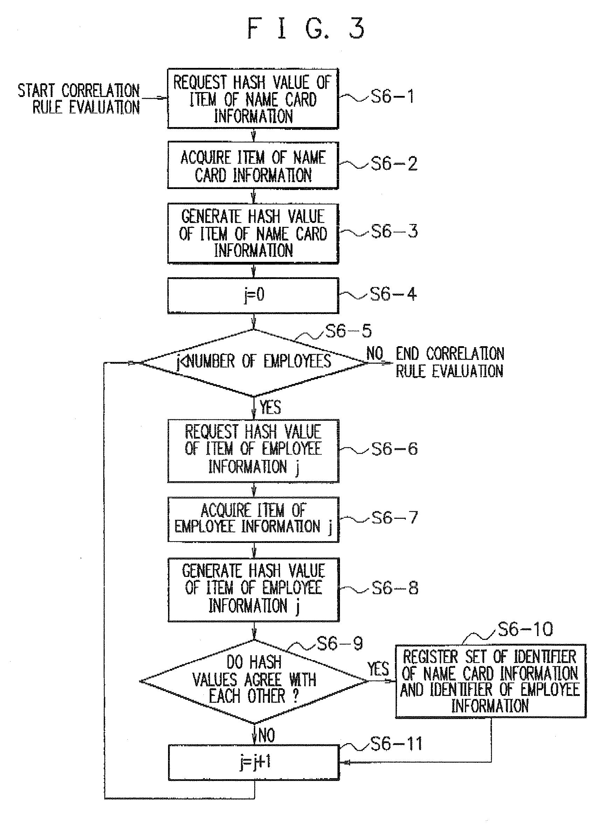

Next, details of step S6 are described below with reference to FIG. 3.
Step S6-1: The comparison section 14 transfers to the telephone directory information filtering section 12 the item name of the name card information serving as a target of the condition of the correlation rule k acquired at step S5, and then requests the hash value of the item.

Step S6-2: The telephone directory information filtering section 12 acquires from the telephone directory information managing section 11 the item corresponding to the item name contained in the name card information indicated by the variable i.

Step S6-3: The telephone directory information filtering section 12 calculates the hash value of the acquired item by using a one-way function. When a plurality of items are present, one hash value is calculated by using all items. Then, the calculated hash value is transferred to the comparison section 14.

Step S6-4: The comparison section 14 sets the value of variable j to be 0.

Step S6-5: The comparison section 14 compares the variable j with the number of employees acquired from the employee information managing section 21. When the value of variable j is smaller than the number of employees, the procedure goes to step S6-6. When the value of variable j is greater than or equal to the number of employees, the operation of step S6 is completed.

Step S6-6: The comparison section 14 transfers to the employee information filtering section 22 the item name of the employee information serving as a target of the condition of the correlation rule k acquired at step S5, and then requests the hash value of the item.

Step S6-7: The employee information filtering section 22 acquires from the employee information managing section 21 the item corresponding to the item name contained in the employee information indicated by the variable j.

Step S6-8: The employee information, filtering section 22 calculates the hash value of the acquired item by using a one-way function. When a plurality of items are present, one hash value is calculated by using all items. Then, the calculated hash value is transferred to the comparison section 14.

Step S6-9: The comparison section 14 determines whether the condition of the correlation rule k acquired at step S5 is satisfied by the hash value of the item of the name card information indicated by the variable i acquired at step S6-3 and the hash value of the item of the employee information indicated by the variable j acquired at step S6-8. When the determination result is truth, the procedure goes to step S6-10. When the determination result is false, the procedure goes to step S6-11.

Step S6-10: The comparison section 14 registers into the correlation result holding section 15 a set of the identifier of the name card information indicated by the variable i and the identifier of the employee information indicated by the variable j.

Step S6-11: The comparison section 14 increments by one the value of variable j. Then, the procedure returns to step S6-5.

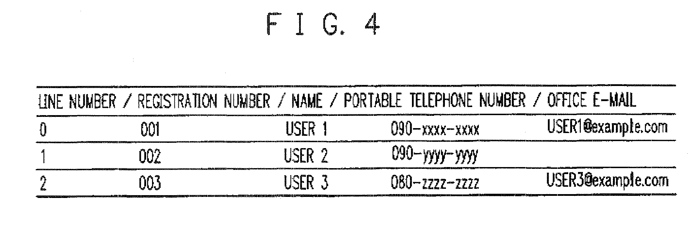

A detailed example of the present embodiment is described below. FIG. 4 shows an example of name card information held by the telephone directory information managing section 11. The telephone directory information managing section 11 holds name card information of User1, User2, and User3. Each name card information contains a name, a portable telephone number, and an office E-mail, and can be distinguished by a registration number.

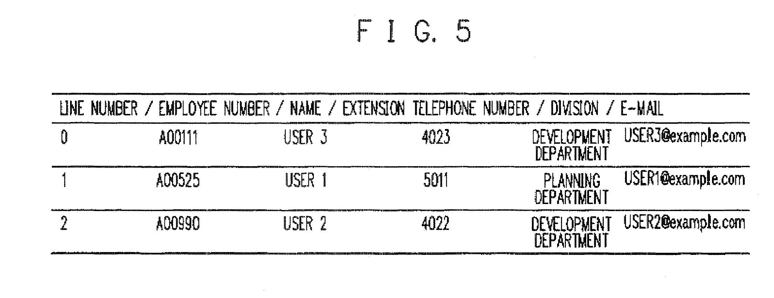

FIG. 5 shows an example of employee information held by he employee information managing section 21. The employee information managing section 21 holds employee information of User1, User2, and User3. Each employee information contains a name, an extension telephone number, a division, and an E-mail, and can be distinguished by an employee number.

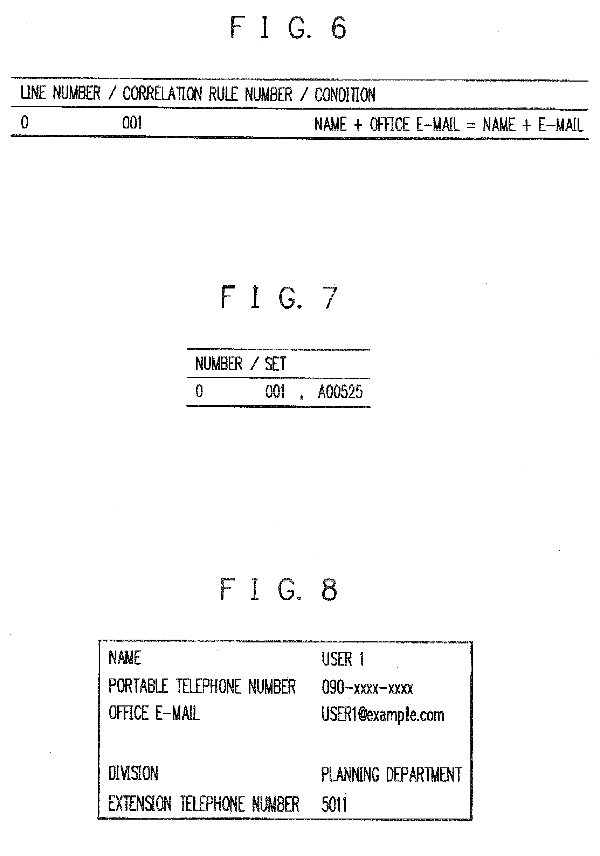

FIG. 6 shows an example of a correlation rule held by the correlation rule holding section 13. The condition contained in the correlation rule 001 is described by a relational expression between an item contained in the name card information and an item contained in the employee information. The condition of the correlation rule 001 shown in the figure is "name+office E-mail=name+E-mail". When the hash value calculated from the name item and the office E-mail item contained in the name card information matches with the hash value calculated from the name item and the E-mail item contained in the employee information, the condition becomes truth.

The variable i, the variable j, and the variable k described above correspond respectively to the line numbers in FIG. 4, FIG. 5, and FIG. 6.

At step S1, when the name card information of User1 is selected, detailed operation of main steps is as follows.

First, the variable i having a value of 0 at step S2 is transferred to the comparison section 14.

Then, in accordance with the number of correlation rules, the following processing is repeated. Since the number of correlation rules is one, the following processing is executed once.

At step S5, the rule of correlation rule number 001 (the 0th line in FIG. 6) is selected.

At step S6-3, a hash value H ("User1 User1@example.com") is generated from the name and the office E-mail contained in the name card information of registration number 001 (the 0th line in FIG. 4).

Then, in accordance with the number of employee information pieces, determination of the correlation rule is repeated. Since the number of employee information, pieces is three, the following determination is executed three times.

In the first execution of step S6-8, a hash value H ("User3 user3@example.com") is generated that is calculated from the name item and the E-mail item of the employee information of an employee number A00111 (the 0th line in FIG. 5). The condition determination result of the correlation rule 001 at step S6-9 is H("User1 user1@example.com")≠H("User3 user3@example.com"), that is, false.

In the second execution of step S6-8, a hash value H ("User1 userl@example.com") is generated that is calculated from the name item and the E-mail item of the employee information of an employee number A00525 (the first line in FIG. 5). The condition determination result of the correlation rule 001 at step S6-9 is H("User1 user1@example.com")=H("User1 user1@example.com"), that is, truth. At step S6-10, a set of the identifier 001 of the name card information and the identifier A00525 of the employee information is registered into the correlation result holding section 15.

In the third execution of step S6-8, a hash value H ("User2 user2@example.com") is generated that is calculated from the name item and the E-mail item of the employee information of an employee number A00990 (the second line in FIG. 5). The condition determination result of the correlation rule 001 at step S6-9 is H("User1 user1@example.com")≠H("User2 user2@example.com"), that is, false.

As a result of the above-mentioned execution, a set [001,A00525] of the identifier of the name card information or User1 and the identifier of the employee information of User1 is registered in the correlation result holding section 15. This situation is shown in FIG. 7.

At step S8, the name, the portable telephone number, and the office E-mail contained in the name card information of User1 are displayed onto the screen. Further, the employee number A00525 that configures a pair with the registration number 001 of User1 is acquired from the correlation result holding section 15. Then, the employee information corresponding to the employee number is acquired from the employee holding section. Then, the division and the extension number contained in the acquired employee information are displayed onto the screen. An example of a screen displayed at step S8 is shown in FIG. 8.

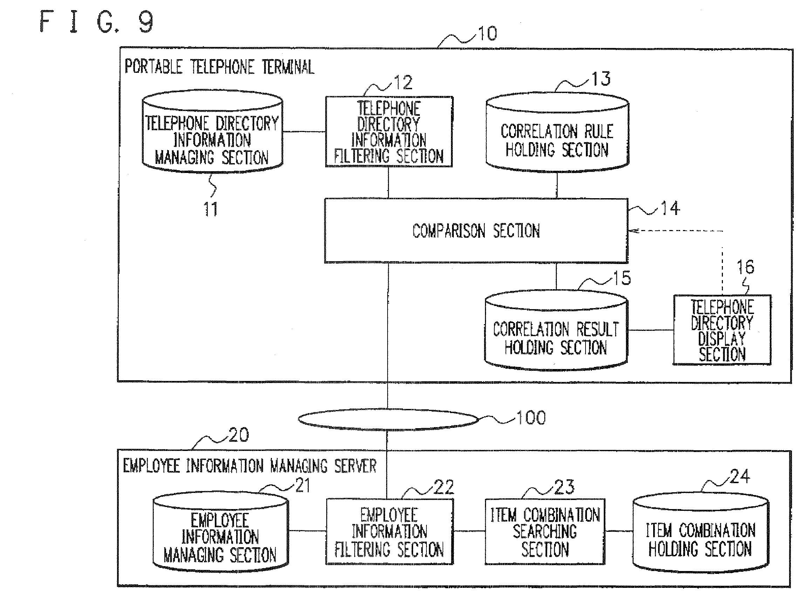

Next, FIG. 9 shows a configuration of an information correlation system in a second exemplary embodiment of the present invention. The configuration of the present embodiment includes a portable telephone terminal 10, an intra-company network 100, and an employee information managing server 20.

The portable telephone terminal 10 include a telephone directory information managing section 11, a telephone directory information filtering section 12, a correlation rule holding section 13, a comparison section 14, a correlation result holding section 15, and a telephone directory display section 16. In addition, the portable telephone terminal 10 includes also the function of connection to the intra-company network 100 through a wireless LAN or the like. Further, although not shown in the figure, the portable telephone terminal 10 includes also the function of a common portable telephone.

The employee information managing server 20 includes an employee information managing section 21, an employee information filtering section 22, an item combination searching section 23, and an item combination holding section 24, and is connected to the infra-company network 100 through a LAN or the like. The employee information managing server 20 may be implemented by a common server equipment or personal computer including a CPU, a memory, a hard disk drive, and the like.

Next, among the functional blocks configuring the present embodiment, those not contained in the first exemplary embodiment given above are described below.

When a hash value of one or more items included in the employee information is requested from the comparison section 14, the employee information filtering section 22 transfers the requested item name to the item combination searching section 23, and then receives an item combination search result. As a result of the search, when the item combination is present, the requested item is acquired from the employee information managing section 21, Then, the hash value of the acquired item is calculated by using a one-way function. When the number of items is plural, one hash value is calculated by using all of the plurality of items in order sorted with respect to the item name. Then, the calculated hash value is transferred to the comparison section 14.

The item combination holding section 24 can hold a plurality of item combinations. One item combination contains one or more item names.

The item combination searching section 23 receives the item name from the employee information filtering section 22, then searches the item combination holding section 24 for an item combination having the same item name as the received item name, and then returns the search result to the employee information, filtering section 22.

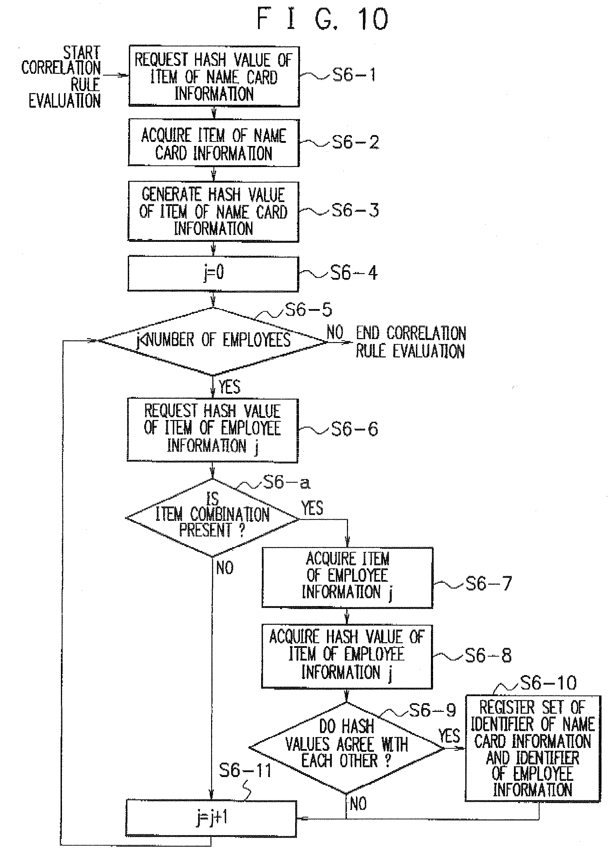

Next, among the flow of operation of the present embodiment, the difference from the flow of operation of the first exemplary embodiment given above is described below. FIG. 10 shows the flow of detailed operation of step S6 in the present embodiment. In the present embodiment, step S6-a is added after step S6-6.

Step S6-a: the employee information filtering section 22 transfers the requested item name to the item combination searching section 23, and then receives an item combination search result. As a result of the search, when the item combination is present, the procedure goes to step S6-7. As a result of the search, when the item combination is not present, the procedure goes to step S6-11.

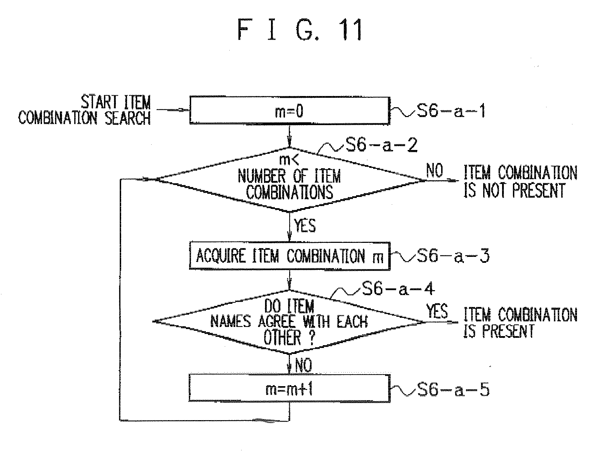

Next, the flow of detailed operation in the item combination searching section 23 is shown in FIG. 11.
Step S6-a-1: The item combination searching section 23 sets the variable m to be 0.

Step S6-a-2: The item combination searching section 23 compares the variable m with the number of item combinations acquired from the item combination holding section 24. When the value of variable m is smaller than the number of item combinations, the procedure goes to step S6-a-3. When the value of variable m is greater than or equal to the number of item combinations, it is notified to the employee information filtering section 22 that the item combination is not present as a result of the search. Then, the operation in the item combination searching section 23 is completed.

Step S6-a-3: The item combination searching section 23 acquires the item combination m indicated by the variable m from the item combination holding section 24.

Step S6-a-4: The item combination searching section 23 determines whether the item name contained in the acquired item combination m matches with the item name requested from the employee information filtering section 22. Here, when a plurality of item names are used like "name+E-mail", determination of matching is performed independently of the order of arrangement of item names like "name+E-mail"="E-mail+name". When the determination result is matched, it is notified to the employee information filtering section 22 that the item combination is present as a result of the search. Then, the operation in the item combination searching section 23 is completed. When the search result is not matched, the procedure goes to step S6-a-5.

Step S6-a-5: The item combination searching section 23 increments by one the value of variable m. Then, the procedure returns to step S6-a-2.

According to the present embodiment, an item in user information in one system is prevented from being inferred by the other system. This is because the hash value used for collation of the user information cannot be generated unless the combination of items registered in the item combination holding section 24 is used.

For example, a hash value generated from one item such as the age whose possible value range is limited can easily be inferred on the basis of trial generation of hash values for some number values, even when the original value of a hash value is not known. However, when a hash value is generated with combining the age with other items, the inference becomes more difficult.

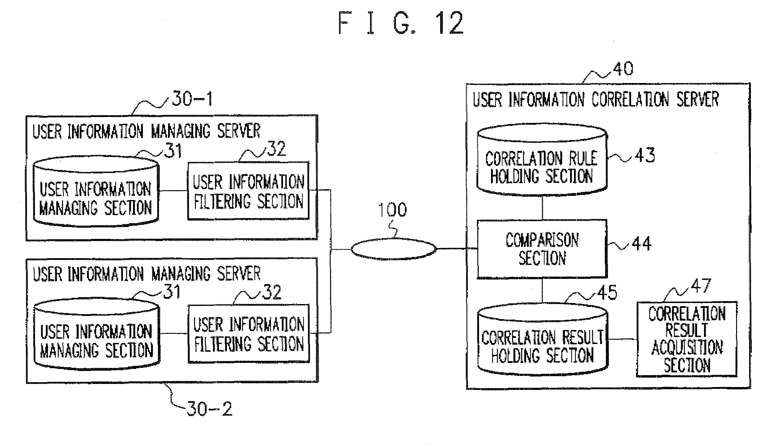

Next, FIG. 12 shows a configuration of a third exemplary embodiment of the present invention. The configuration of the third exemplary embodiment of the present invention includes a user information managing server 30-1, a user information managing server 30-2, an intra-company network 100, and a user information correlation server 40. In the first and the second exemplary embodiments given above, one of the two systems has correlated the user information. However, the position where correlation of user information is to be performed is not limited to this.

Each of the user information managing server 30-1 and the user information managing server 30-2 includes a user information managing section 31 and a user information filtering section 32, and is connected to the intra-company network 100 through a LAN or the like. The user information correlation server 40 includes a correlation rule holding section 43, a comparison section 44, a correlation result holding section 45, and a correlation result acquisition section 47, and is connected to the intra-company network 100 through a LAN or the like.

Next, among the functional blocks configuring the present embodiment, those not contained in the first and the second exemplary embodiments given above are described below.

The user information managing section 31 includes a function similar to that of the telephone directory information managing section 11 and the employee information managing section 21 in the first and the second exemplary embodiments given above.

The user information filtering section 32 includes a function similar to that of the telephone directory information filtering section 12 and the employee information filtering section 22 in the first and the second exemplary embodiments given above.

The correlation result acquisition section 47 includes the function of acquiring a set of one user information and the other user information held in the correlation result holding section 15.

According to the present embodiment, a case that the user information managing section 31 increases newly or deceases can be treated easily. This is because the responsibility of the server is clearly separated between the side for managing the user information and the side for correlating the user information.

Next, a fourth exemplary embodiment of the present invention is described below. The correlation of user information may be performer on the basis of the current value of a dynamically varying item such as a user's position information. Further, the correlation of user information may be performed on the basis of the value of a dynamically varying item at a past time point (or in a duration).

Next, a fifth exemplary embodiment of the present invention is described below. In the first and the second exemplary embodiments given above, correlation of user information has been performed when name card information was selected by user operation. However, the timing of executing the correlation of user information is not limited to this.

Correlation of user information may also be executed at the stage of starting the system or the application. For example, this may be performed at the time of turning ON the portable telephone terminal 10 or the like.

Further, correlation of user information may be executed when user information is generated. For example, this may be performed when name card information is received from another portable telephone terminal 10 through infrared ray communication or the like, or alternatively when a user has operated an input device and completed the inputting of name card information or the like,

Further, correlation of user information may be executed at fixed time intervals.

Here, the exemplary embodiments given above are preferred embodiments of the present invention, and may be modified and implemented variously as long as not departing from the scope of the present invention. For example, a program for realizing the function of a portable telephone terminal or a server of various kinds may be read and executed by each device so that processing for implementing the function of each device may be performed. Further, the program may be transmitted to another computer system via a CD-ROM, a magneto-optic disk, or the like serving as a computer-readable recording medium, or alternatively via transmitting waves such as the Internet and a telephone line serving as a transmission medium.

This application is based upon and claims the benefit of priority from Japanese patent application No. 2007-041398, filed on February 21, 2007, the disclosure of which is incorporated herein in its entirety by reference.

### INDUSTRIAL APPLICABILITY

The present invention is applicable to: an application and a service in which telephone book data in a portable telephone or an IP phone client is linked with user information in another system; and an information processing system, device, or software for performing information access control on the basis of user information in another system such as a position information managing server.

### BRIEF DESCRIPTION OF THE DRAWINGS

[FIG. 1] FIG. 1 is a diagram showing a configuration of a system in a first exemplary embodiment of the present invention.

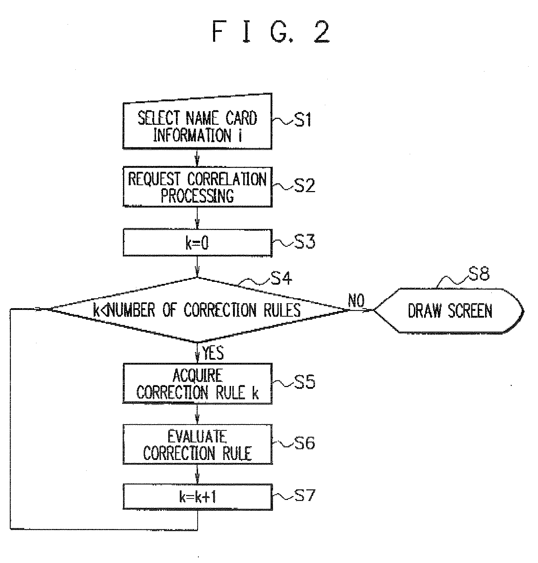

[FIG. 2] FIG. 2 is a. diagram showing a flow of the first exemplary embodiment of the present invention.
[FIG. 3] FIG. 3 is a diagram showing of step S6 in Fig. 2 in the first exemplary embodiment of the present invention.
[FIG. 4] FIG. 4 is a diagram showing an example of name card information held by a telephone directory information managing section in the first exemplary embodiment of the present invention.
[FIG. 5] FIG. 5 is a diagram showing an example of employee information held by an employee information managing section in the first exemplary embodiment of the present invention.
[FIG. 6] FIG. 6 is a diagram showing an example, of a correlation rule held by the correlation rule holding section in the first exemplary embodiment of the present invention.
[FIG. 7] FIG. 7 is a diagram showing data registered in a correlation result holding section in the first exemplary embodiment of the body invention.
[FIG. 8] FIG. 8 is a diagram showing an example of a screen displayed at step S8 in the first exemplary embodiment of the present invention.
[FIG. 9] Fig. 9 is a diagram showing a configuration of a system in a second exemplary embodiment of the present invention.
[FIG. 10] FIG. 10 is a diagram showing details of step S6 in FIG. 2 in the second exemplary embodiment of the present invention.
[FIG. 11] FIG. 11 is a diagram showing a flow of detailed operation of an item combination searching section in the second exemplary embodiment of the present invention.
[FIG. 12] FIG. 12 is a diagram showing a configuration of a system in a third exemplary embodiment of the present invention.

### DESCRIPTION OF REFERENCE NUMERALS

- 10: Portable telephone terminal
- 11: Telephone directory information managing section
- 12: Telephone directory information filtering section
- 13: Correlation rule holding section
- 14: Comparison section
- 15: Correlation result holding section
- 16: Telephone directory display section
- 20: Employee information managing server
- 21: Employee information managing section
- 22: Employee information filtering section
- 23: Item combination searching section
- 24: Item combination holding section
- 100: Intra-company network

## Claims

1. An information correlation system for correlating a plurality of user information lists each containing a plurality of items, wherein
when hash values for an item serving as a key of correlation match with each other between the plurality of user information lists, it is determined that relevance is present, and
user information of a corresponding user is correlated.

2. The information correlation system as claimed in claim 1, wherein a plurality of correlation rules are provided that define a relation between an item contained in one user information list and an item contained in the other user information list, and the relevance of the user information lists is determined in accordance with the correlation rules.

3. The information correlation system as claimed in claim 1 or 2, comprising correlation result holding means for holding a set of an identifier of one user information list and an identifier of the other user information list that are determined as being relevant.

4. The information correlation system as claimed in any one of claims 1 to 3, wherein the hash values used for collation of the user information lists are generated only from a combination of registered items.

5. The information correlation system as claimed in any one of claims 1 to 4, comprising item combination searching means for, when the relevance is to be determined on the basis of a combination of the plurality of items, determining whether the user information list serving as a correlation target has the plurality of items.

6. A user information correlating method for correlating a plurality of user information lists each containing a plurality of items, wherein
when hash values for an item serving as a key of correlation match with each other between the plurality of user information lists, it is determined that relevance is present, and
user information of a corresponding user is correlated.

7. The user information correlating method as claimed in claim 6, wherein a plurality of correlation rules are provided that define a relation between an item contained in one user information list and an item contained in the other user information list, and the relevance of the user information lists is determined in accordance with the correlation rules.

8. The user information correlating method as claimed in claim 6 or 7, comprising a correlation result holding step of holding a set of an identifier of one user information list and an identifier of the other user information list that are determined as being relevant.

9. The user information correlating method as claimed in any one of claims 6 to 8, wherein the hash values used for collation of the user information lists are generated only from a combination of registered items.

10. The user information correlating method as claimed in any one of claims 6 to 9, comprising an item combination searching step of, when the relevance is to be determined on the basis of a combination of the plurality of items, determining whether the user information list serving as a correlation target has the plurality of items.

11. program for causing a computer system to execute processing of
determining that relevance is present when hash values for an item serving as a key of correlation match with each other between a plurality of user information lists, and
correlating user information of a corresponding user.

12. The program as claimed in claim 11, wherein a plurality of correlation rules are provided that define a relation between an item contained in one user information list and an item contained in the other user information list, and a computer system is caused to execute processing of determining the relevance of the user information lists in accordance with the correlation rules.

13. The program as claimed in claim 11 or 12, for causing a computer system to execute correlation result holding processing of holding a set of an identifier of one user information list and an identifier of the other user information list that are determined as being relevant.

14. The program as claimed in any one of claims 11 to 13, wherein the hash values used for collation of the user information lists are generated only from a combination of registered items.

15. The program as claimed in any one of claims 11 to 14, for a computer system to execute, when the relevance is to be determined on the basis of a combination of the plurality of items, item combination searching step of determining whether the user information list serving as a correlation target has the plurality of items is executed.
